# EUROPEAN PATENT SPECIFICATION

(11) **EP 2 094 431 B1**
(45) Date of publication and mention of the grant of the patent: **26.09.2018**
(21) Application number: 07835210.1
(22) Date of filing: 14.11.2007
(51) Int. Cl.: B23K 35/30, C22C 38/40, C22C 38/44, C22C 38/34, C22C 38/54, C22C 38/02, C22C 38/58, C22C 38/00, F28F 21/08

(54) **BRAZING MATERIAL**
LÖTMATERIAL
MATÉRIAU DE BRASAGE

(30) Priority: 17.11.2006 SE 0602467
(43) Date of publication of application: 02.09.2009
(73) Proprietor: Alfa Laval Corporate AB, 221 00 Lund (SE)
(72) Inventor: SJÖDIN, Per, 221 00 Lund (SE)
(74) Representative: Alfa Laval Attorneys
(86) International application number: PCT/SE2007/001011
(87) International publication number: WO 2008/060226

(56) References cited:
- EP-A1- 0 854 002
- WO-A1-02/38327
- WO-A1-02/38327
- WO-A1-02/090038
- WO-A1-02/098600
- WO-A1-02/098600
- WO-A1-2006/126953
- DE-A1- 10 321 524
- JP-A- 53 144 852
- US-A- 4 402 742
- US-A- 4 410 604
- US-A- 4 516 716
- US-B1- 6 656 292
- LYMAN T. ET AL: 'Welding and Brazing' METALS HANDBOOK, 8TH EDITION, AMERICAN SOCIETY FOR METALS vol. 6, August 1971, page 664, XP003021509

## Description

The present invention relates to a brazing material, a method of brazing, a product brazed with the brazing material.

### The Invention

Objects of different steel materials or iron-based alloy materials are usually assembled by brazing or soldering with Nickel-based or Copper-based brazing materials. Hereinafter the term brazing is used, but it should be understood that the term also comprises soldering. Brazing is a process for joining parts of metals, but brazing can also be used for sealing objects or coating objects. The brazing temperature is below the original solidus temperature of the base material. During brazing of materials the brazing material is completely or partly melted during the heat treatment.

Traditional brazing of iron-based materials is performed by Nickel-based or Copper-based brazing materials, and these brazing materials can cause corrosion, for example due to differences in electrode potential. The corrosion problem will be enhanced when the brazed object is exposed to a chemically aggressive environment. The use of Nickel-based or Copper-based brazing material can also be limited in a number of food applications due to jurisdictions.

One problem is the melting temperature range of the coating or brazing materials. When selecting a brazing material or a coating material, considerations are based on the solidus or liquidus temperatures of the alloy and the base material. Lately iron-based brazing materials have been developed for brazing objects of traditional stainless steel. These iron-based brazing materials are functioning quite well, but when the temperature range for brazing is broad, then there are risks for defects to occur in the obtained products. A clean element has a sharp melting point, but an alloy contains many different elements in each defined alloy and has therefore often a broad melting interval.

According to the invention one consequently tries to attain that the brazing joint shall contain only a small part of brittle phases. One knows that the amount of brittle phase affects the fatigue strength negatively. The amount of brittle phase depends among all on the joint clearance, the thickness of the plate, the amount of brazing material, how the brazing material is applied and by the time- temperature relation during the brazing.

When developing brazing materials there are a lot of properties of importance. One of those is the brazing temperature. A high brazing temperature is quite often associated with high mechanical strength or other properties that are of importance for the braze joint, but it also has some disadvantages. A high temperature may decrease the properties of the base material, by e.g. grain growth, formation of phases in the material, a large impact from the braze filler into the base material by diffusion of elements from the filler to the base material and other changes of the properties of the base material. A high temperature may also increase the risk of erosion of the base material. Costs are also associated with high temperature since there is a need for more energy input and more expensive furnaces. The high temperatures also wear the furnace more, which increases the cost. A normal way when developing a Fe-based brazing material is using Si and or B as melting point depressants. Boron has a quite large impact of the melting point but has a lot of disadvantages, such as it easily forms chromium borides. Therefore it is of great importance not to use too much boron. The formation of chromium borides decreases the amount of Chromium in the base material, which then e.g. decreases the corrosion resistance and other properties of the base material. Therefore, when chromium is one of the elements of the alloy then no or very small amounts of boron are generally the best choice. Silicon is also used to decrease the melting point, however silicon itself, as a melting point depressant, does not have as great impact in comparison to e.g. B. So if silicon alone is used as a melting point decreased, a quite large amount has to be used. Silicon may also form silicides, why large amounts may cause problems. One element, which can be used as melting point depressant, is phosphorous. Phosphorus could be a good selection if only the brazing temperature was of importance, since it has a great impact on the melting point. However, braze joints with large amounts of P are normally very fragile and have therefore a quite low strength. Phosphor can also form phosfides, such as iron-phosphides, that are fragile and decreases the strength of the braze filler and the base material. Surprisingly, when alloying with a new type of mixture comprising Si and P a new type of iron based braze filler was found, which has a low melting interval without or very low negative effects from the Si and P additives. The alloy also had another surprising positive property, a narrow melting interval, which is very positive when brazing. The reason why is that it is desirable that all elements in the braze filler should melt at approximately the same time. Another positive property is that the filler of the present invention is wetting the surface very well and has great flow ability.

WO 02/38327 A1 discloses an iron based brazing material for joining objects by brazing which is alloyed with Si as a liquidus lowering element and possibly also with B or P.

The invention is defined in the claims.

Accordingly, the present invention relates to an iron based brazing material as defined in the claims.

The alloy may be manufactured by gas-atomising or water-atomising or melt-spinning.

As mentioned above brazing temperature is preferably below the original solidus temperature of the material of the parts to be brazed. The brazing cycle involves both melting and solidifying of the brazing material. The melting temperature and solidifying temperature may be the same for very specific materials, but the usual situation is that materials are melting within temperature range of melting, and solidifying within another temperature range of solidifying. The temperature range between the solidus state and the liquidus state is herein defined as the temperature difference between the solidus state and the liquidus state, and is measured in a number of °C. The brazing material of the invention has thus a temperature range between the solidus state and the liquidus state, which according to the invention is within a range of 75°C. According to an alternative aspect of the invention the alloy may have solidus temperature and a liquidus temperature within a range of 50°C.

According to a further alternative aspect of the present invention may the iron-based brazing material be manufactured as a paste. The iron-based brazing paste of the invention may comprise the iron-based brazing material and an aqueous binder system or an organic binder system. The binder system may comprise a solvent, which could be hydrophilic or hydrophobic i.e. water-based or oil-based. The oil-based binder could be polymers such as poly (met) acrylate among others, Could be biopolymers such as cellulose derivatives, starches, waxes.

According to another alternative may the iron-based brazing paste of the invention comprise the iron-based brazing material and an aqueous binder system or an organic binder system based on a solvent such as water, oils, or combinations thereof. The alloy comprised in the paste may be in form of powder, granules.

The present invention relates also to a method of brazing articles of stainless steel, comprising the following steps: step (i) applying the brazing material of the invention on to parts of stainless steel; step (ii) optionally assembling the parts; step (iii) heating the parts from step (i) or step (ii) in a non-oxidizing atmosphere, in a reducing atmosphere, in vacuum, or combinations thereof, to a temperature of up to at least 250°C for at least 10 minutes, then heating the parts up to a temperature of less than 1080°C for at least 10 minutes, heating the parts up to a temperature less than 1200°C for at least 5 minutes and then cooling the parts; and optionally step (iv) repeating one or more of step (i), step (ii) and step (iii). Different brazed products need different brazing procedures; some products could be brazed by just going through step (i), step (ii) and step (iii), but other products are more complicated and one or more of step (i), step (ii) and step (iii) need to be repeated is indicated in step (iv).

According to an alternative of the invention may the method also comprise that the parts in step (iii) are heated in a non-oxidizing atmosphere, in a reducing atmosphere, in vacuum, or combinations thereof, up to a temperature of at least 250°C for at least 10 minutes, then heating the parts up to a temperature of less then 1080°C for at least 30 minutes, then heating the parts up to a temperature over 1100°C for less than 720 minutes, and then cooling the parts.

According a to one alternative of the invention may the heating the parts up to a temperature over 1100°C be for less than 360 minutes before the cooling the parts. According a to another alternative of the invention may the heating the parts up to a temperature over 1100°C be for less than 180 minutes before the cooling the parts.

According to an alternative of the invention may the method also comprise that the parts in step (iii) are brazed at a temperature within the range of from 1040°C to 1190°C for less than 30 minutes.

According to another alternative of the invention may the method also comprise that the parts in step (iii) are brazed at temperature within the range of from 1040°C to 1190°C for less than 20 minutes.

According to a further alternative of the invention may the method also comprise that the parts in step (iii) are preheated up to a temperature below 1050°C before heating up to a temperature of above 1100°C for at least 5 minutes. And then heat treating the parts at a temperature above 950°C for at least accumulated 20 min, this can be made in the braze cycle, but also after the braze in e.g. at a second heating source.

According to another alternative may the brazing material be sprayed as a powder on the surfaces, which shall be joined, by for instance by a paint spray gun, rolling, brushing, thermal spraying, e.g. high velocity oxygen fuel (HVOF) etc or may the surface, joint etc. be coated by melts. The iron based brazing filler material may be applied to planar surfaces or to large surfaces by the aid of capillary force breakers. The capillary force breakers can be in form of grooves, traces, paths, passages, v or u shaped tracks or pathways etc. or in form of nets etc. The iron-based brazing filler material may be applied into the capillary force breakers, i.e. into the grooves, traces, paths, passages, v or u shaped tracks, pathways, nets etc., or may the brazing filler material be applied close to the capillary force breakers. During heating the applied iron-based brazing filler material will flow to the area where the capillary force may be broken and braze together the surfaces, which are adjacent to each other. Thus, the brazed area provides brazed, sealed or tight cervices, joints etc. between planar surface where it is hard otherwise to braze uniformly. The capillary force breakers enable also brazing of surfaces having large crevices, parts having odd shape, etc.

When the brazing material is applied between two parts close to a capillary force breaker the flowing viscous brazing material will stop the flowing motion and set at the rim of the capillary force breaker. A reactor channel may be functioning as a capillary force breaker. A plate having a reactor channel is applied with brazing material and a barrier plate or the like is placed in contact with the reactor channel plate. The flowing brazing material will stop and set at boarder of the reactor channel, which will seal the reactor plate against the barrier plate without filling the reactor channel with set brazing material.

How far the brazing material can flow between two bordering surfaces depends partly on the brazing materials setting time and the distance between the surfaces, and the amount of brazing material. Since the brazing material "sticks" to each surface, which is to be brazed, the intermediate space between the surfaces becomes smaller. As the intermediate space becomes smaller while at the same time the brazing material sets, it also becomes more difficult for the brazing material to flow in between. The desired amount of brazing material is supplied to the contact points, which are to be brazed together in any of the described or other ways. The brazing material may cover an area that is somewhat larger than the contact joint point. The contact joint points may have a diameter of at least 0.5 mm. Since the brazing process is a metallic process and the respective surfaces for brazing take the form of metallic material, then iron-based brazing material during the brazing process diffuses with bordering surfaces, which are to be brazed together. The joint or seam between the two joined surfaces will more or less "disappear" during the brazing process according to one aspect of the invention. The brazed seam together with the surfaces of the metallic parts will become a unity with only small changes in material composition of the alloys.

During brazing will the brazing material migrate by capillary forces to areas to be joined by brazing. The brazing material according to the invention has good wetting ability and good flow ability, which will result that residual alloys around the brazing areas will be small. According to one alternative will the residual alloys after brazing have a thickness less than 0.1 mm on the applied surfaces.

The present invention relates also to an article of stainless steel obtained by the present method. The present invention relates further to a brazed article of stainless steel, which comprises at least one base material of stainless steel and brazed brazing material of the invention.

According to one alternative aspect may the articles or the parts be selected from reactors, separators, columns, heat exchangers, or equipments for chemical plants or food plants, or for car-industries. According to another alternative aspect may the objects be heat exchangers, plate reactors, or combinations thereof. According to another alternative aspect of the invention may the brazed article be a paring disc, which is used in a separator. According to one alternative aspect may the articles, be brazed heat exchanger plates, brazed reactor plates, or combinations thereof.

When the parts are heat exchanger plates, the plates can be endplates, adaptor plates, sealing plates, frame plates etc., and constitute a heat exchanger system. Each of the heat exchanger plates comprise at least one port recess, which port recesses together form part of a port channel when the plates are placed on one another. The plates are stacked together in a plate stack or a plate pack in the heat exchanger. The plate package comprises between the plates a number of channels, which accommodate a number of media. The media in adjacent channels are subject to temperature transfer through the heat transfer plate in a conventional manner. The plates may comprise an edge, which may partly extend down and over the edge portion of an adjacent heat transfer plate in the plate stack. The edges of the plates seal against the adjacent heat transfer plate in such a way that a channel may be formed between the plates. This channel either allows flow of a medium or is closed so that no flow takes place and the channel is therefore empty. To stiffen the plate package and the port regions, an adaptor plate or an endplate may be fitted to the package. The surfaces of the endplate or the adaptor plate are with may be planar so that contact surfaces between the surfaces may be maximised. As previously mentioned, the respective port recesses on the plates coincide, thereby forming a channel. On the inside of this port channel there is therefore a joint between the two plates. To prevent leakage at this joint brazing material may be applied round the port region between the plates. The brazing material may be placed in or close by a capillary force breaker, which may extend wholly or partly round the port region between the plates. In the plate package brazing material may be applied on different pre-designed or predetermined parts of the plates. During the brazing process, the brazing material will become viscous and will flow from the applied parts out between the plates due to the action of capillary force. The advantage of applying brazing material on to predetermined places makes it possible to control volume and amount of the brazing material, and to control which parts of the surfaces to be brazed and which are not. When brazing a heat exchanger at least three heat exchanger plates are needed, but it is usual that several plates are brazed together. According to one alternative aspect of the invention are a plate pack of several plates brazed together at the same time in the same oven.

The brazing method of the invention may either comprise brazing the article assembled with all its parts at the same time or may the article be brazed in a stepwise fashion where parts are first assembled and brazed together, and then assembled with further parts and brazed together, and so on using the same type of brazing material in each brazing cycle.

Further developments are specified in independent claims and the dependent claims.

The invention is explained in more detail in by means the following Examples. The purpose of the Examples is to test the brazing material of the invention, and is not intended to limit the scope of invention.

### Example 1

Test samples 1 to 4 were made for checking the solidus and liquidus temperatures of the brazing material of the invention. The compositions of the test samples are summarised in Table 1.

**Table 1**

| Sample No. | Fe [wt%] | Cr [wt%] | Mn [wt%] | Ni [wt%] | Mo [wt%] | Si [wt%] | P [wt%] | C [wt%] | B [wt%] |
|---|---|---|---|---|---|---|---|---|---|
| 1 | bal. | 16.48 | 1.63 | 16.65 | 2.02 | 4.57 | 4.9 | 0.016 | 0.01 |
| 2 | bal. | 17.37 | 1.9 | 11.99 | 2.13 | 4.91 | 5.19 | 0.014 | 0.01 |
| 3 | bal. | 17.42 | 1.67 | 13.33 | 1.99 | 3.69 | 5.0 | 0.013 | 0.01 |
| 4 | bal. | 16.63 | 1.82 | 15.99 | 1.89 | 3.3 | 4.69 | 0.018 | 0.01 |

The liquidus and solidus temperature of the samples was tested by means of differential thermal analysis (DTA). The atmosphere used when analysing was Argon. The test was performed with a heating and cooling rate of 10°C/min. The liquidus temperature is the temperature above which a substance is completely liquid. The solidus temperature is the temperature below which a substance is completely solid. The values for the solidus and liquidus temperature were established by estimations where the melting process started and stopped.

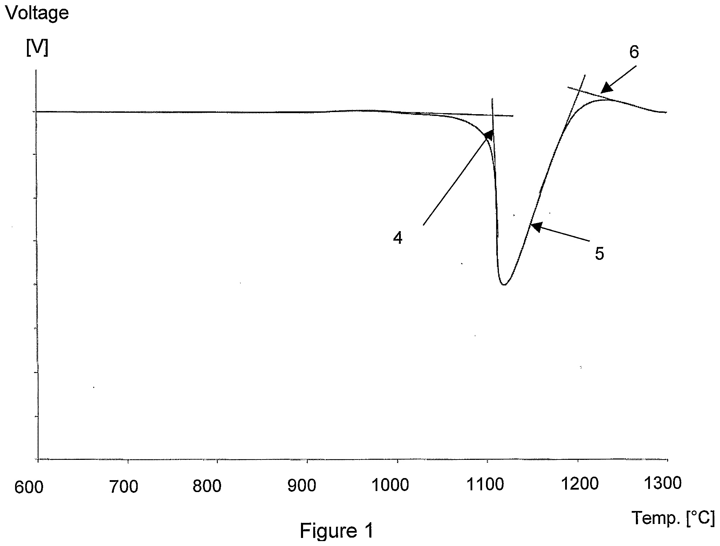

The estimations were performed by approximation of the melting curve, which was measured and registered as a DTA-curve, see Figure 1. The melting process can be seen in the DTA-curve by the change in the gradient of the heating curve. When the process is finalised, the gradient becomes constant again. To establish the start and stop of the melting process an approximation was made by drawing tangents (1) on the voltage drop peak (2). Tangents (3) on the base line is drawn and where the tangents (1) and (3) are crossing each other there are the approximated end values of the melting range.

The solidus temperatures and the liquidus temperatures of each sample are calculated as described above and are summarised in Table 2.

**Table 2**

| Sample No. | Solidus temp. [°C] | Liquidus temp. [°C] | Difference [°C] |
|---|---|---|---|
| 1 | 1058 | 1097 | 39 |
| 2 | 1068 | 1099 | 31 |
| 3 | 1055 | 1100 | 45 |
| 4 | 1060 | 1092 | 32 |

The tests show that the difference between solidus temperature and liquidus temperatures are surprisingly narrow.

### Reference Example 2

Test samples 5 to 8 were made for checking tensile strength of joints having brazed zones of the brazing materials disclosed. The compositions of the test samples of unbrazed brazing material are summarised in Table 3.

**Table 3**

| Sample No. | Fe [wt%] | Cr [wt%] | Mn [wt%] | Ni [wt%] | Mo [wt%] | Si [wt%] | P [wt%] | C [wt%] |
|---|---|---|---|---|---|---|---|---|
| 5 | bal. | 17.0 | 1,78 | 12,1 | 2,13 | 1,01 | 10,1 | 0,067 |
| 6 | bal. | 17.0 | 1,53 | 12,1 | 2,35 | 0,44 | 10,8 | 0,045 |
| 7 | bal. | 17,4 | 1,79 | 12.0 | 2,32 | 4,44 | 5,78 | 0,12 |
| 8 | bal. | 17,3 | 1,76 | 12,1 | 2,31 | 5,55 | 5,89 | 0,111 |

The brazing materials were tested by means of making braze trials of small pressed plates. The brazed samples were then tensile tested, the results are summarised in Table 4.

**Table 4**

| Sample No. | Braze cycle for at least15 min. at [°C] | Waffle test [kN] |
|---|---|---|
| 5 | 1120 | 2.1 |
| 6 | 1120 | 2.4 |
| 7 | 1190 | 3.0 |
| 8 | 1190 | 2,7 |

As can be seen from Table 4 the tensile test results on samples brazed with braze materials having small amounts of Si, i.e. less than 1.2 wt%, and large amounts of phosphorus, see samples number 5 and 6, had a much lower strength than those brazed with a brazing material having higher amounts of Si, see samples 7 and 8. Both Example 1 and Example 2 show surprisingly, that when decreasing the amount of P and increasing the amount of Si result in increase of the tensile strength as well as lower the melting temperature, and small temperature melting intervals was found.

### Example 3

Test samples of braze filler materials were compared in this Example for the purpose of checking performances on brazed prototypes. Test prototypes were brazed with different test sample of the braze fillers. The prototypes used in these tests were brazed plate heat exchangers. All prototypes were manufactured with the identical parts, such as identical plates, connections, reinforcements etc. Everything was done with the purpose to make the prototypes as identical as possible. The only difference between the prototypes were the braze filler and the braze cycles. The differences in braze cycle were of course necessary, since different braze fillers have different braze cycles. Three different braze fillers were used filler A was a pure copper (Cu) braze filler, fillers B and C (according to the invention) are listed in Table 5 below. The inevitable amounts of contaminating elements are not listed in the Table.

**Table 5**

| Filler | Fe [wt%] | Cr [wt%] | Mn [wt%] | Ni [wt%] | Mo [wt%] | Si [wt%] | P [wt%] | B [wt%] |
|---|---|---|---|---|---|---|---|---|
| B | Bal. | 17,1 | 1,3 | 14,5 | 1,8 | 9,5 | - | 0,9 |
| C | Bal. | 17,3 | 1,9 | 11,9 | 2,1 | 4,9 | 5,1 | - |

The brazed heat exchangers prototypes were then evaluated by testing their burst pressure, pressure fatigue, and temperature fatigue. The burst pressure test was carried out by increasing the pressure until failure, the pressure fatigue test was carried out by alternating the pressure with a set pressure variation until failure, and the temperature fatigue test was carried out by alternating the temperature with a set temperature variation and temperature heating/cooling rate until failure. The results of the tests are summarised in Table 6.

**Table 6**

| Test | Filler A | Filler B | Filler C |
|---|---|---|---|
| Burst pressure [bar] | 197 | 111 | 91 |
| Burst pressure [bar] | 183 | 106 | 92 |
| Burst pressure [bar] | 189 | 103 | 97 |
| Pressure fatigue [1000 cycles] | 88 | 91 | 154 |
| Pressure fatigue [1000 cycles] | 67 | 101 | 207 |
| Pressure fatigue [1000 cycles] | 119 | 119 | - |
| Temperature fatigue [cycles] | 913 | 991 | 1704 |
| Temperature fatigue [cycles] | 1037 | 985 | 1442 |
| Temperature fatigue [cycles] | 1011 | 988 | 1573 |

The results of the burst pressure tests indicate that filler C has the lowest mechanical properties. The tests showed that the temperature fatigue performances were highest for filler C, and also that the pressure fatigue performances were highest. The results were very surprising since it was not expected that both the temperature- and the pressure fatigue performances could be highest for the new filler, since filler C had the lowest burst pressure of the three.

One of the reasons for the exceptional good fatigue results is the combination of the braze fillers properties. For example the new braze filler of the invention has excellent wetting and flow properties, which properties result in smooth braze joints that distribute the load evenly in the brazed joint and decrease the risk for initiation of fatigue cracks. The good wetting and flow properties of the filler also result in large brazed joints that will decrease the total stress by increasing the loaded area.

The good flow and wetting properties of the filler were also confirmed by metallographic analysis. Some of the prototypes were cross-sectioned, grind and policed after brazing, with the purpose to study the microstructure etc. It was then observed that the flow and wetting properties were very good, seen that very little residuals of the braze filler was left on the surfaces around the braze joint. Almost all filler had flown to the braze joint by capillary forces. The study confirmed that almost no residuals of the braze filler were left on the base material surface, but almost all were found in the braze joint. Of course there is braze filler on the base material surface close to the braze joint since the braze joint will adapt its shape according to the wetting angle between the braze filler and the base material, consequently this filler is defined to the braze joint also.

The residuals of braze filler on the surface was measured. Measurements of residuals of braze fillers were performed on areas where more than a 0.2 mm thick layer of braze filler had been applied prior to brazing. The cross-sections were studied after brazing with the braze filler. The test result showed that the thickness of the residuals were 0.01, 0.03, <0.01, 0.02, <0.01, 0.02, <0.01 mm. These measurements showed the thickness of the residuals are much less than the expected based on other tested iron based braze fillers, which iron based braze filler could have a residual thickness about 0.15 mm. Other areas that differ from these measurements are where the fillers did not have any capillary contact during brazing or due to that the capillaries already were filled with braze filler.

## Claims

1. An iron based brazing material comprising an iron-based alloy consisting of:
(i) 16 to 18 wt% chromium (Cr);
(ii) 1.5 to 2.0 wt% manganese (Mn);
(iii) 11 to 17 wt% nickel (Ni);
(iv) 1.5 to 2.5 wt% molybdenum (Mo);
(v) 0 to 1.0 wt% nitrogen (N);
(vi) 3.0 to 5.0 wt% silicone (Si);
(vii) 0 to 0.2 wt% boron (B);
(viii) 4.0 to 5.5 wt% phosphorus (P);
optionally 0.0 to 2.5 wt% of each of one or more of elements selected from the group consisting of vanadium (V), titanium (Ti), tungsten (W), aluminum (Al), niobium (Nb), hafnium (Hf) and tantalum (Ta); the alloy being balanced with Fe and inevitable amounts of contaminating elements, wherein the contaminating elements are any one of carbon (C), oxygen (O), and sulphur (S); wherein Si and P are in amounts effective to lower melting temperature, and wherein the alloy is having a temperature difference between the solidus temperature and the liquidus temperature within a range of 75°C.

2. The brazing material according to any one of the preceding claims, wherein the alloy is produced by gas-atomising or water-atomising or melt-spinning.

3. The brazing material according to any one of the preceding claims, wherein the alloy is having a temperature difference between the solidus temperature and the liquidus temperature within a range of 50°C.

4. The brazing material according to any one of the preceding claims, wherein the brazing material is a paste comprising an aqueous binder system or an organic binder system, or combinations thereof.

5. The brazing material according to claim 4, wherein the binder system is any one of poly (met) acrylate, cellulose derivatives, starches, waxes, or combinations thereof.

6. The brazing material according to any one of the preceding claims, wherein the brazing material is a paste and the iron-based alloy is provided as powder or granules produced by gas-atomising or water-atomising.

7. The brazing material according to claim 6, wherein the paste also comprises an aqueous binder system or an organic binder system, or combinations thereof.

8. The brazing material according to claim 7, wherein the binder system is any one of poly (met) acrylate, cellulose derivatives, starches, waxes, or combinations thereof.

9. A method of brazing articles of stainless steel, comprising the following steps: step (i) applying the brazing material according to any one of claims 1 to 8 on to parts of stainless steel; step (ii) optionally assembling the parts; step (iii) heating the parts from step (i) or step (ii) in a non-oxidizing atmosphere, in a reducing atmosphere, in vacuum, or combinations thereof, up to a temperature of at least 250°C for at least 10 minutes, then heating the parts up to a temperature of less than 1080°C for at least 10 minutes, then heating the parts up to a temperature less than 1200°C for at least 5 minutes; and optionally step (iv) repeating one or more of step (i), step (ii) and step (iii).

10. The method of brazing according to claim 9, wherein the parts in step (iii) are heated in a non-oxidizing atmosphere, in a reducing atmosphere, in vacuum, or combinations thereof, up to a temperature of at least 250°C for at least 10 minutes, then heating the parts up to a temperature of less then 1080°C for at least 30 minutes, then heating the parts up to a temperature over 1100°C for less than 720 minutes and then cooling the parts.

11. The method according to claim 9 or 10, wherein residual alloy after brazing being less than 50% of applied alloy in step (i).

12. A brazed article obtained by the method according to claim 9, 10 or 11.

13. The brazed article according to claim 12, wherein the alloy after brazing are located in one or more braze joints, and less than 0.1 mm of the braze filler being left as residuals on the surfaces.

14. The brazed article according to claim 12 or 13, wherein the article is a plate heat exchanger.

## Patentansprüche

1. Hartlötmaterial auf der Basis von Eisen, umfassend eine Legierung auf der Basis von Eisen bestehend aus:
(i) 16 bis 18 Gew.-% Chrom (Cr);
(ii) 1,5 bis 2,0 Gew.-% Mangan (Mn);
(iii) 11 bis 17 Gew.-% Nickel (Ni);
(iv) 1,5 bis 2,5 Gew.-% Molybdän (Mo);
(v) 0 bis 1,0 Gew.-% Stickstoff (N);
(vi) 3,0 bis 5,0 Gew.-% Silicon (Si);
(vii) 0 bis 0,2 Gew.-% Bor (B);
(viii) 4,0 bis 5,5 Gew.-% Phosphor (P);
wahlweise 0,0 bis 2,5 Gew.-% von jedem von einem oder mehr der Elemente ausgewählt aus der Gruppe bestehend aus Vanadium (V), Titan (Ti), Wolfram (W), Aluminium (Al), Niob (Nb), Hafnium (Hf) und Tantal (Ta); wobei die Legierung mit Fe und unvermeidlichen Mengen verunreinigender Elemente ausgeglichen ist, wobei die verunreinigenden Elemente irgendwelche sind von Kohlenstoff (C), Sauerstoff (O) und Schwefel (S) sind; wobei Si und P in Mengen vorliegen, die zum Reduzieren der Schmelztemperatur wirksam sind, und wobei die Legierung einen Temperaturunterschied zwischen der Solidustemperatur und der Liquidustemperatur innerhalb eines Bereichs von 75 °C aufweist.

2. Hartlötmaterial nach irgendeinem der vorhergehenden Ansprüche, wobei die Legierung durch Gaszerstäubung oder Wasserzerstäubung oder Schmelzspinnen hergestellt wird.

3. Hartlötmaterial nach irgendeinem der vorhergehenden Ansprüche, wobei die Legierung einen Temperaturunterschied zwischen der Solidustemperatur und der Liquidustemperatur innerhalb eines Bereichs von 50 °C aufweist.

4. Hartlötmaterial nach irgendeinem der vorhergehenden Ansprüche, wobei das Hartlötmaterial eine Paste ist, die ein wässriges Bindemittelsystem oder ein organisches Bindemittelsystem oder Kombinationen davon umfasst.

5. Hartlötmaterial nach Anspruch 4, wobei das Bindemittelsystem irgendeines ist von Poly(meth)acrylat, Cellulosederivaten, Stärken, Wachsen oder Kombinationen davon.

6. Hartlötmaterial nach irgendeinem der vorhergehenden Ansprüche, wobei das Hartlötmaterial eine Paste ist und die Legierung auf der Basis von Eisen als Pulver oder Granulate bereitgestellt wird, das/die durch Gaszerstäuben oder Wasserzerstäuben hergestellt wird/werden.

7. Hartlötmaterial nach Anspruch 6, wobei die Paste auch ein wässriges Bindemittelsystem oder ein organisches Bindemittelsystem oder Kombinationen davon umfasst.

8. Hartlötmaterial nach Anspruch 7, wobei das Bindemittelsystem irgendeines ist von Poly(meth)acrylat, Cellulosederivaten, Stärken, Wachsen oder Kombinationen davon.

9. Verfahren zum Hartlöten von Artikeln aus Edelstahl, umfassend die folgenden Schritte: Schritt (i) Aufbringen des Hartlötmaterials nach irgendeinem der Ansprüche 1 bis 8 auf Teile von Edelstahl; Schritt (ii) wahlweise Zusammenbauen der Teile; Schritt (iii) Erhitzen der Teile aus Schritt (i) oder Schritt (ii) in einer nichtoxidierenden Atmosphäre, in einer reduzierenden Atmosphäre, unter Vakuum oder Kombinationen davon, bis zu einer Temperatur von mindestens 250 °C mindestens 10 Minuten lang, dann Erhitzen der Teile bis zu einer Temperatur von weniger als 1080 °C mindestens 10 Minuten lang, dann Erhitzen der Teile bis zu einer Temperatur von weniger als 1200 °C mindestens 5 Minuten lang; und wahlweise Schritt (iv) Wiederholen eines oder mehrerer von Schritt (i), Schritt (ii) und Schritt (iii).

10. Verfahren zum Hartlöten nach Anspruch 9, wobei die Teile in Schritt (iii) in einer nichtoxidierenden Atmosphäre, in einer reduzierenden Atmosphäre, unter Vakuum oder Kombinationen davon, bis zu einer Temperatur von mindestens 250 °C mindestens 10 Minuten lang erhitzt werden, die Teile dann bis zu einer Temperatur von weniger als 1080 °C mindestens 30 Minuten lang erhitzt werden, die Teile dann bis zu einer Temperatur über 1100 °C weniger als 720 Minuten lang erhitzt werden und die Teile dann gekühlt werden.

11. Verfahren nach Anspruch 9 oder 10, wobei die verbleibende Legierung nach dem Hartlöten weniger als 50 % der in Schritt (i) aufgebrachten Legierung beträgt.

12. Hartgelöteter Artikel, der durch das Verfahren nach Anspruch 9, 10 oder 11 erhalten wird.

13. Hartgelöteter Artikel nach Anspruch 12, wobei die Legierung nach dem Hartlöten sich in einer oder mehreren hartgelöteten Verbindungen befindet und weniger als 0,1 mm des Hartlötfüllstoffs als Reste auf den Oberflächen zurückgelassen werden.

14. Hartgelöteter Artikel nach Anspruch 12 oder 13, wobei der Artikel ein Plattenwärmetauscher ist.

## Revendications

1. Matériau de brasage à base de fer comprenant un alliage à base de fer constitué de:
(i) de 16 à 18 % en pds de chrome (Cr);
(ii) de 1,5 à 2,0 % en pds de manganèse (Mn);
(iii) de 11 à 17 % en pds de nickel (Ni);
(iv) de 1,5 à 2,5 % en pds de molybdène (Mo);
(v) de 0 à 1,0 % en pds d'azote (N);
(vi) de 3,0 à 5,0 % en pds de silicone (Si);
(vii) de 0 à 0,2 % en pds de bore (B);
(viii) de 4,0 à 5,5 % en pds de phosphore (P);
optionnellement de 0,0 à 2,5 % en pds de chacun d'un ou plusieurs des éléments sélectionnés dans le groupe constitué du vanadium (V), du titane (Ti), du tungstène (W), de l'aluminium (Al), du niobium (Nb), de l'hafnium (Hf) et du tantale (Ta); l'alliage étant équilibré entre le Fe et des quantités inévitables d'éléments de contamination, les éléments de contamination étant n'importe lesquels du carbone (C), de l'oxygène (O), et du soufre (S); le Si et le P étant en quantités efficaces pour la température de fusion inférieure, et l'alliage ayant une différence de température comprise entre la température de solidus et la température de liquidus située dans une plage de 75°C.

2. Matériau de brasage selon l'une quelconque des revendications précédentes, l'alliage étant produit par atomisation au gaz ou atomisation à l'eau ou filage à l'état fondu.

3. Matériau de brasage selon l'une quelconque des revendications précédentes, l'alliage ayant une différence de température comprise entre la température de solidus et la température de liquidus située dans une plage de 50°C.

4. Matériau de brasage selon l'une quelconque des revendications précédentes, le matériau de brasage étant une pâte comprenant
un système liant aqueux
ou un système liant organique, ou leurs combinaisons.

5. Matériau de brasage selon la revendication 4, le système liant étant l'un quelconque du poly(méth)acrylate, des dérivés de cellulose, des amidons, des cires, ou leurs combinaisons.

6. Matériau de brasage selon l'une quelconque des revendications précédentes, le matériau de brasage étant une pâte et l'alliage à base de fer étant préparé sous la forme de poudre ou de granules produites par atomisation au gaz ou atomisation à l'eau.

7. Matériau de brasage selon la revendication 6, la pâte comprenant également un système liant aqueux ou un système liant organique, ou leurs combinaisons.

8. Matériau de brasage selon la revendication 7, le système liant étant l'un quelconque du poly(méth)acrylate, des dérivés de cellulose, des amidons, des cires, ou leurs combinaisons.

9. Procédé de brasage d'articles en acier inoxydable, comprenant les étapes suivantes: étape (i) application du matériau de brasage selon l'une quelconque des revendications 1 à 8 sur les parties de l'acier inoxydable; étape (ii) éventuellement assemblage des parties; étape (iii) chauffage des parties de l'étape (i) ou de l'étape (ii) sous une atmosphère non oxydante, sous une atmosphère réductrice, sous vide, ou leurs combinaisons, jusqu'à une température d'au moins 250°C durant au moins 10 minutes, puis le chauffage des parties jusqu'à une température inférieure à 1080°C durant au moins 10 minutes, puis le chauffage des parties jusqu'à une température inférieure à 1200°C durant au moins 5 minutes; et éventuellement étape (iv) répétition d'une ou plusieurs de l'étape (i), l'étape (ii) et l'étape (iii).

10. Procédé de brasage selon la revendication 9, les parties dans l'étape (iii) sont chauffées sous une atmosphère non oxydante, sous une atmosphère réductrice, sous vide, ou leurs combinaisons, jusqu'à une température d'au moins 250°C durant au moins 10 minutes, puis le chauffage des parties jusqu'à une température inférieure à 1080°C durant au moins 30 minutes, puis le chauffage des parties jusqu'à une température supérieure à 1100°C durant moins de 720 minutes et ensuite le refroidissement des parties.

11. Procédé selon les revendications 9 ou 10, l'alliage résiduel après brasage étant inférieur à 50 % de l'alliage appliqué dans l'étape (i).

12. Article brasé obtenu selon le procédé selon les revendications 9, 10 ou 11.

13. Article brasé selon la revendication 12, l'alliage après brasage étant localisé dans un ou plusieurs joints de brasage, et moins de 0,1 mm de la charge de brasage étant laissé comme matières résiduelles sur les surfaces.

14. Article brasé selon les revendications 12 ou 13, l'article étant un échangeur thermique à plaque.
